# EUROPEAN PATENT SPECIFICATION

(11) **EP 4 026 811 B1**
(45) Date of publication and mention of the grant of the patent: **19.02.2025**
(21) Application number: 21151192.8
(22) Date of filing: 12.01.2021
(51) Int. Cl.: C03B 27/04

(54) **ENERGY - SAVING COOLING SYSTEM FOR COOLING GLASS SHEETS**
ENERGIESPARENDES KÜHLSYSTEM ZUR KÜHLUNG VON GLASSCHEIBEN
SYSTÈME DE REFROIDISSEMENT À ÉCONOMIE D'ÉNERGIE POUR REFROIDISSEMENT DE FEUILLES DE VERRE

(43) Date of publication of application: 13.07.2022
(62) Divisional of application: 21200924.5
(73) Proprietor: Tung Chang Machinery and Engineering Co., Ltd., Taoyuan City (TW)
(72) Inventor: Tu, Li-Jen, Taoyuan City (TW)
(74) Representative: Lang, Christian

(56) References cited:
- JP-A- S61 270 230
- US-A1- 2020 131 070
- US-A1- 2020 369 550

## Description

### BACKGROUND

### TECHNICAL FIELD

The present disclosure relates to a glass cooling processing technology, in particular to an energy-saving cooling system that can adjust the wind output region according to a size and a position of the glass and correspondingly regulate an output wind power which corresponds to a rotating speed of a motor.

### RELATED ART

Regarding conventional techniques of glass tempering and cooling processing, different devices and systems are known. For example, document JP S61 270230 A discloses a conventional device for tempering a glass plate, document US 2020/0369550 A1 further discloses a conventional plate glass tempering cooling system and from document US 2020/0131070 A1 a conventional method for tempering glass sheets is known.

Generally, glass has excellent penetration rate and scratch resistance, so it is widely used in daily life. At present, related glass products can be seen not only in buildings and general daily necessities, but also in electronic appliances and vehicles. It can be seen that the peripheral products of glass have flooded people's lives.

Glass is mostly made through batching, melting, forming, annealing and other processes. After the glass is made, further processing can be performed to improve the functionality of the glass. For example, the annealed glass can be cut to the required size, then the glass is heated by a glass heating furnace to soften the glass, and then the glass is rapidly cooled down by a cooling device, so the temperature of the glass surface is decreased below the annealing temperature for rapid hardening and shrinking. When the inside of the glass shrinks, it will cause a compressive stress on the surface, and the inside of the glass will have a tensile stress, which can increase the strength of the glass to form a so-called strengthened glass.

Generally speaking, the aforementioned cooling device at least includes components, such as, a motor, a wind box, and a plurality of wind outlet structures. The wind box includes air outlets arranged horizontally in an upper row and a lower row on the surface of the wind box, and each of the wind outlet structures is connected to the corresponding air outlets. Between the wind outlet structures arranged in the upper and lower rows, rollers are installed and used to carry the glass. When the motor of the cooling device operates, wind can be generated. The wind can then be passed through the wind outlet structure and blown to the glass on the rollers, so that the glass can be cooled down.

The size of the glass to be performed for the cooling process is different each time, but the conventional cooling device can only output the wind in the whole wind output region every time when it is started. The conventional cooling device and cannot adjust the wind output region according to the glass size and cannot correspondingly adjust the rotating speed of the motor. Therefore, it will result in waste of energy and unnecessary costs.

### SUMMARY

In view of the above-mentioned problems of the prior art, the purpose of the present disclosure is to provide an energy-saving cooling system that can adjust the wind area according to the size and the position of the glass, and further can correspondingly regulate the output wind power which corresponds to the rotating speed of the motor.

According to one objective of the present disclosure, the present disclosure provides an energy-saving cooling system according to claim 1. Preferred embodiments thereof are defined in the dependent claims.

The energy-saving cooling system according to the present invention, comprises: a motor, an air blower, wherein the air blower is connected on one end to the motor and on the other end to a wind box body, plurality of slot plates, wherein the slot plates are disposed in the wind box body, an outer surface of the wind box body has a plurality of air outlets, the air outlets are horizontally arranged in an upper row and a lower row, the air outlets in an upper row are arranged respectively opposite to the air outlets in the lower row, each of the air outlets has a wind hole, and the slot plates are respectively disposed in the wind holes; a plurality of driving components, wherein each of the driving components is connected to the corresponding slot plate in the upper row and the corresponding slot plate in the lower row which is arranged opposite to the corresponding slot plate in the upper row, the corresponding two slot plates are controlled by the driving component to pivot to close or open the two corresponding wind holes; a controlling device, wherein the controlling device is connected to the driving components and the motor, the controlling device controls the driving components according to a control signal, and adjusts a rotating speed of the motor according to the control signal so that the air blower generates corresponding wind power; and a detection device, wherein the detection device is connected to the controlling device, the controlling device generates the control signal according to a position and a dimension of a piece of glass to be cooled down, and the position and the dimension of the piece of the glass to be cooled down are detected by the detection device.

According to the above technical features, the driving component comprises: a base, wherein the base is connected to the outer surface of the wind box body; a cylinder, wherein one end of the cylinder is connected to the base; an adapter, wherein one end of the adapter is connected to another one end of the cylinder, and the other one end of the cylinder is opposite to the end of the cylinder which is connected to the base; a pivot, wherein one end of the pivot is connected to the another one end of the adapter, and the other one end of the adapter is opposite to the end of the adapter which is connected to the cylinder; and a connecting rod, wherein the connecting rod is connected to another one end of the pivot, the other one end of the pivot is opposite to the end of pivot which is connected to the adapter, and two opposite ends of the connecting rod are connected to the corresponding slot plate in the upper row and the corresponding slot plate in the lower row which is arranged opposite to the corresponding slot plate in the upper row.

According to the above technical features, an inner surface of the wind box body has a plurality of through holes arranged horizontally in the lower row and the upper row, the through holes arranged in the lower row are arranged respectively opposite to the through holes arranged in the upper row, and the through holes are respectively connected to the wind holes; wherein energy-saving wind box further comprises: a lifting structure, wherein the lifting structure is disposed on the inner surface of the wind box body and connected to the controlling device, and the controlling device controls the lifting structure according to the control signal; and a shield plate, wherein the shield plate is connected to the lifting structure, the shield plate is controlled by the lifting structure to rise or descend, so as to close the through holes in the upper row or the through holes in the lower row.

According to the above technical features, the lifting structure comprises: two bracket components, wherein the two bracket components are respectively arranged on an upper part and a lower part of the inner surface of the wind box body; and at least one transmission component, wherein the transmission component comprises two transmission gears and a transmission chain, the two transmission gears are respectively disposed on the two bracket components, and the transmission chain surrounds the two transmission gears and is connected to the shield plate.

According to the above technical features, the energy-saving cooling system further comprising: a guide frame, wherein the guide frame is disposed on the inner surface of the wind box body and connected to the shield plate, and the shield plate is controlled by the lifting structure to slide on the guide frame.

Based on the above, the present disclosure is mainly based on the arrangement of the slot plates in the wind holes of the outer surface of the wind box body, each slot plate is connected to the corresponding driving component, and the slot plate can be pivoted through the control of the driving component to close or open the corresponding wind hole. Furthermore, the present disclosure can also set a shield plate on the inner surface of the wind box body. The shield plate can be longitudinally displaced under the control of the lifting structure to selectively shield the through holes which are located on the inner surface and communicated with the wind holes. Therefore, the cooling device of the present disclosure can adjust the wind output region according to the size and the position of the glass and can further adjust the rotating speed of the motor according to the number of opened wind holes of the wind box body, so as to achieve energy saving and cost reduction.

### DESCRIPTIONS OF DRAWINGS

FIG. 1 is a first schematic diagram of an energy-saving wind box according to a first embodiment of the present disclosure not falling within the scope of the claims.
FIG. 2 is a second schematic diagram of an energy-saving wind box according to a first embodiment of the present disclosure not falling within the scope of the claims.
FIG. 3 is a third schematic diagram of an energy-saving wind box according to a first embodiment of the present disclosure not falling within the scope of the claims.
FIG. 4 is a fourth schematic diagram of an energy-saving wind box according to a first embodiment of the present disclosure not falling within the scope of the claims.
FIG. 5 is a fifth schematic diagram of an energy-saving wind box according to a first embodiment of the present disclosure not falling within the scope of the claims.
FIG. 6 is a sixth schematic diagram of an energy-saving wind box according to a first embodiment of the present disclosure not falling within the scope of the claims.
FIG. 7 is a first schematic diagram of an energy-saving wind box according to a second embodiment of the present disclosure not falling within the scope of the claims.
FIG. 8 is a second schematic diagram of an energy-saving wind box according to a second embodiment of the present disclosure not falling within the scope of the claims.

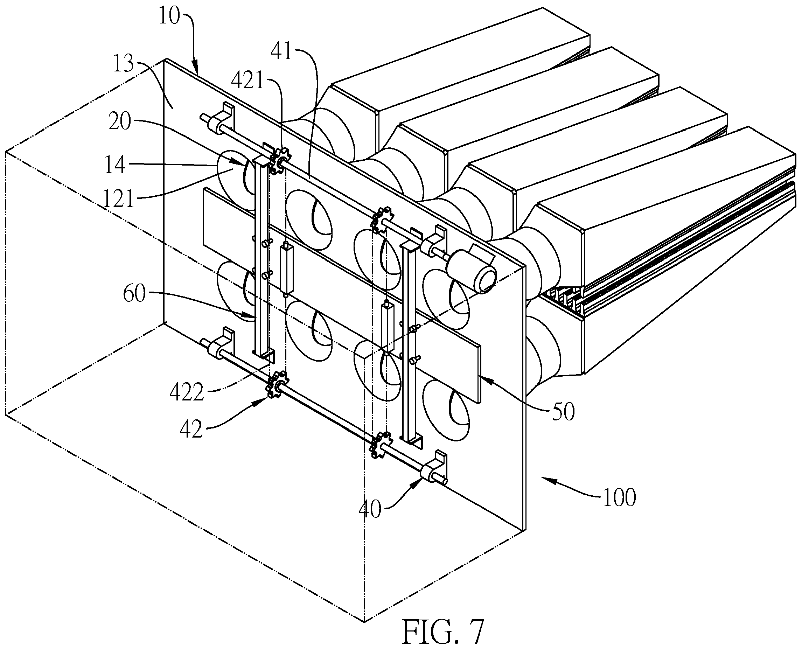

FIG. 7 is a third schematic diagram of an energy-saving wind box according to a second embodiment of the present disclosure not falling within the scope of the claims.

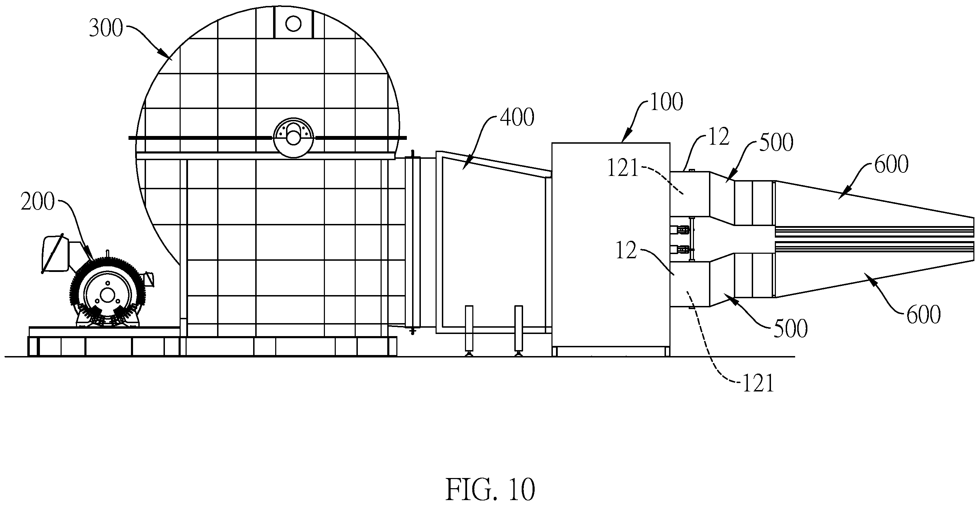

FIG. 10 is a schematic diagram of a cooling device of the present disclosure not falling within the scope of the claims.

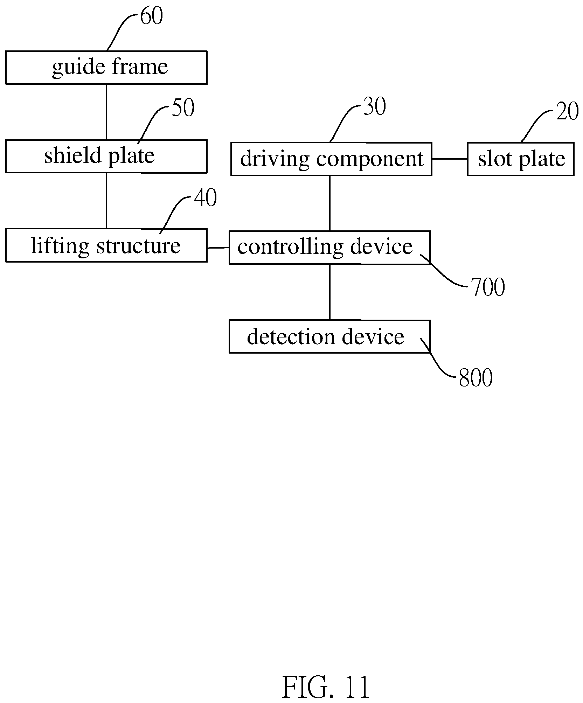

FIG. 11 is a schematic diagram of an energy-saving cooling system of the present disclosure.

### DESCRIPTIONS OF EMBODIMENTS

Embodiments of the present disclosure will now be described, by way of example only, with reference to the accompanying drawings. The following drawings are dedicated for description, and they are schematic and exemplary, being not drawn and precisely allocated in accordance with the actual ratio, thus not limiting the present disclosure.

The energy-saving cooling system of the present disclosure is applied to glass cooling processing technology. When the glass is heated and softened by a heating furnace, the present disclosure can be used to rapidly cool down the glass and make the glass rapidly harden and shrunken, thereby increasing the strength of the glass. Further, the present disclosure can control the wind output range and region according to the size and the position of the glass, avoiding the output of wind to the region where the glass does not exist, so as to save energy and cost.

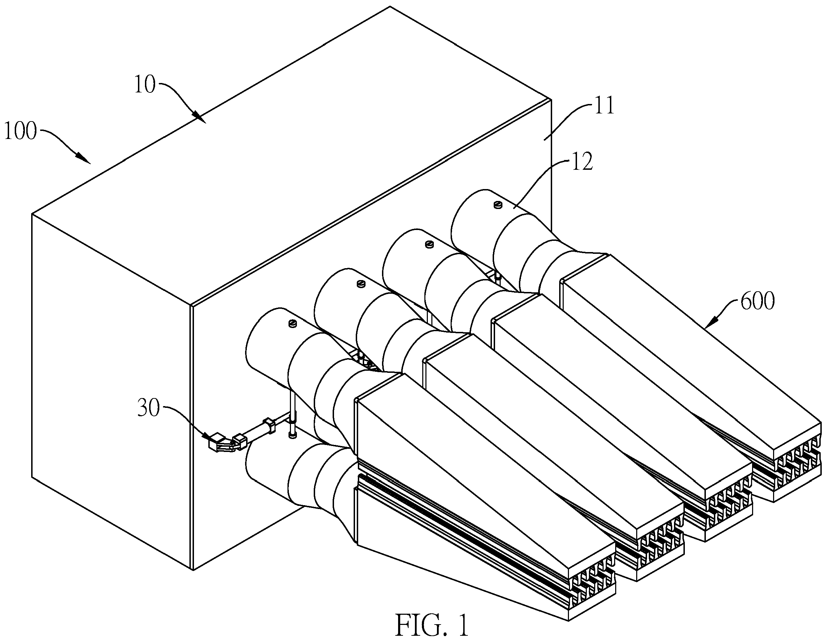

Refer to FIG. 1 through FIG. 3, and FIG. 1 through FIG. 3 are respectively a first through third schematic diagrams of a first embodiment of an energy-saving wind box not falling within the scope of the claims. As shown in the drawings, the energy-saving wind box 100 mainly comprises a wind box body 10, slot plates 20 and driving components 30. An outer surface 11 of the wind box body 10 has a plurality of air outlets 12. The air outlets 12 are horizontally arranged in an upper row and a lower row on the outer surface 11, the air outlets 12 in an upper row are arranged respectively opposite to the air outlets 12 in the lower row, and each of the air outlets 12 has a wind hole 121.The air outlet 12 is connected to a corresponding one of wind outlet structures 600 directly or indirectly. The wind power flow to the wind outlet structure 600 via the corresponding wind hole 121 of the corresponding air outlet 12. Then through the wind outlet structure 600, the wind power is output to cool down the glass. The main technical feature of the present disclosure is that the slot plates 20 are provided in the wind holes 121 of the air outlets 12, respectively. Each of the driving components 30 is connected to the corresponding slot plate 20 in the upper row and the corresponding slot plate 20 in the lower row which is arranged opposite to the corresponding slot plate 20 in the upper row. The corresponding two slot plates 20 are controlled by the driving component 30 to pivot to close or open the two corresponding wind holes 121. In this way, the corresponding wind hole 121 can be opened according to the size and the position of the glass to be cooled down, so that the wind output region can be controlled.

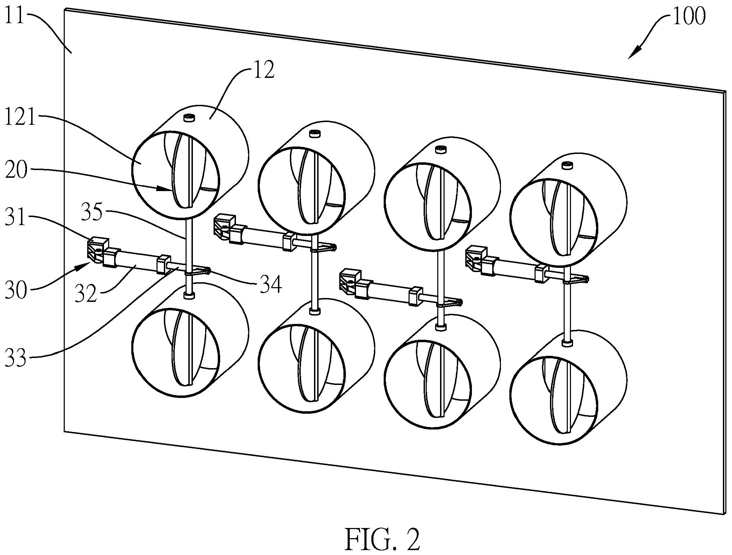

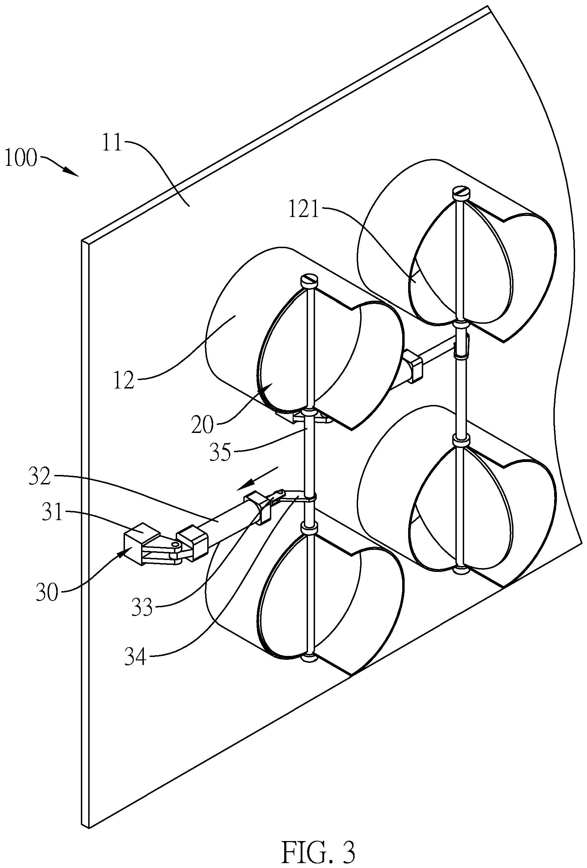

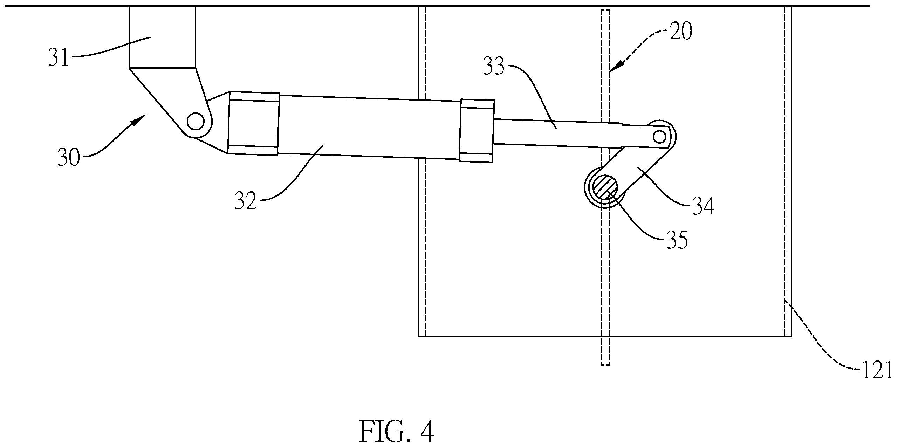

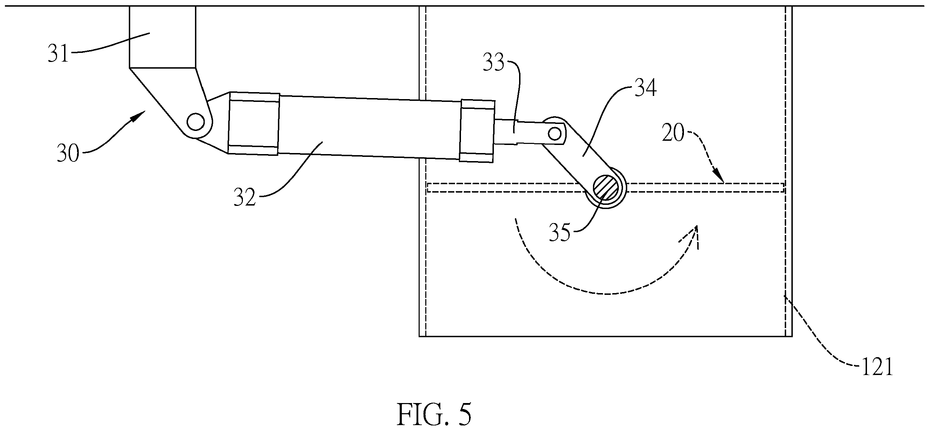

Refer to FIG. 4 and FIG. 5, and FIG. 4 and FIG. 5 are respectively a fourth and fifth schematic diagrams of the first embodiment of an energy-saving wind box not falling within the scope of the claims. Specifically, the driving component 30 comprises a base 31, a cylinder 32, an adapter 33, a pivot 34 and a connecting rod 35. The base 31 is connected to the outer surface 11 of the wind box body 10. One end of the cylinder 32 is connected to the base 31. One end of the adapter 33 is connected to another one end of the cylinder 32, and the other one end of the cylinder 32 is opposite to the end of the cylinder 32 which is connected to the base 31. One end of the pivot 34 is connected to the other one end of the adapter 33, and the other one end of the adapter 33 is opposite to the end of the adapter 33 which is connected to the cylinder 32. The connecting rod 35 is connected to another one end of the pivot 34, the other one end of the pivot 34 is opposite to the end of pivot 34 which is connected to the adapter 33, and two opposite ends of the connecting rod 35 are connected to the corresponding slot plate 20 in the upper row and the corresponding slot plate 20 in the lower row which is arranged opposite to the corresponding slot plate 20 in the upper row. When the cylinder 32 activates, the pivot 34 pivots to drive the connecting rod 35, and the corresponding slot plate 20 in the upper row and the corresponding slot plate 20 in the lower row which is arranged opposite to the corresponding slot plate 20 in the upper row can rotate by the power transmission of the connecting rod 35. When the maximal surface of the slot plate 20 is parallel to the output wind direction of the wind hole 121, the wind hole 121 is opened, as shown in FIG. 2 and FIG. 4. When the maximal surface of the slot plate 20 is vertical to the output wind direction of the wind hole 121, the wind hole 121 is closed as shown in FIG. 3 and FIG. 5.

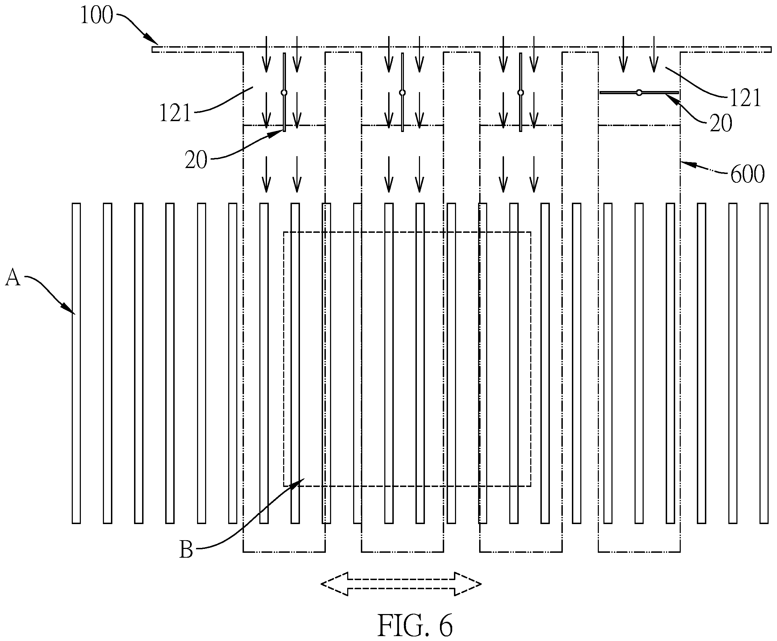

Refer to FIG. 6, and FIG. 6 is a sixth schematic diagram of the first embodiment of an energy-saving wind box not falling within the scope of the claims. As shown in the drawings, when the size of the glass B to be cooled down on the rollers A is detected by human judgment or the device automatically, the energy-saving wind box 100 opens the corresponding wind holes 121 according to the dimension and the position of the glass B, and the wind holes which correspond to the non-existence region of the glass B are closed. In this way, only the wind outlet structures 600 which correspond to the position of the glass B output the wind power, so that the cooling operation can be completed with the most energy saving.

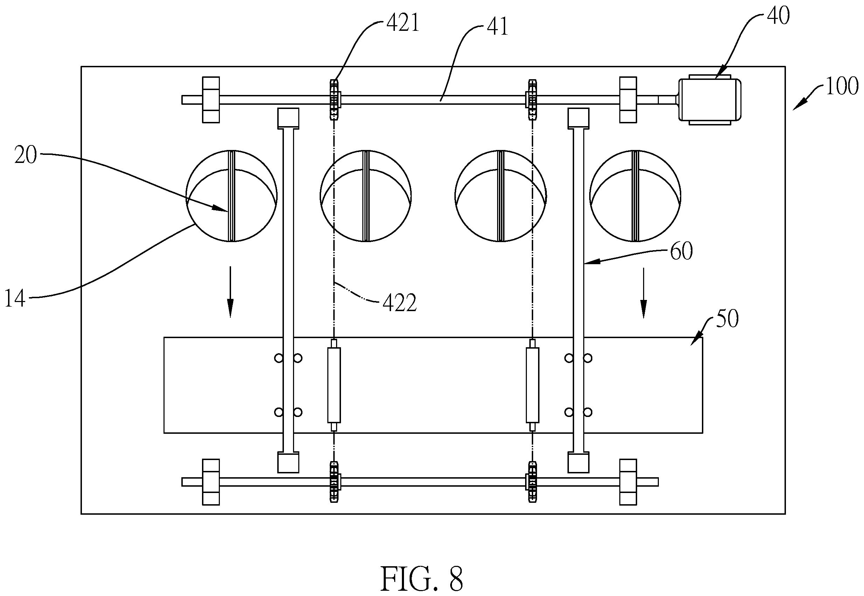

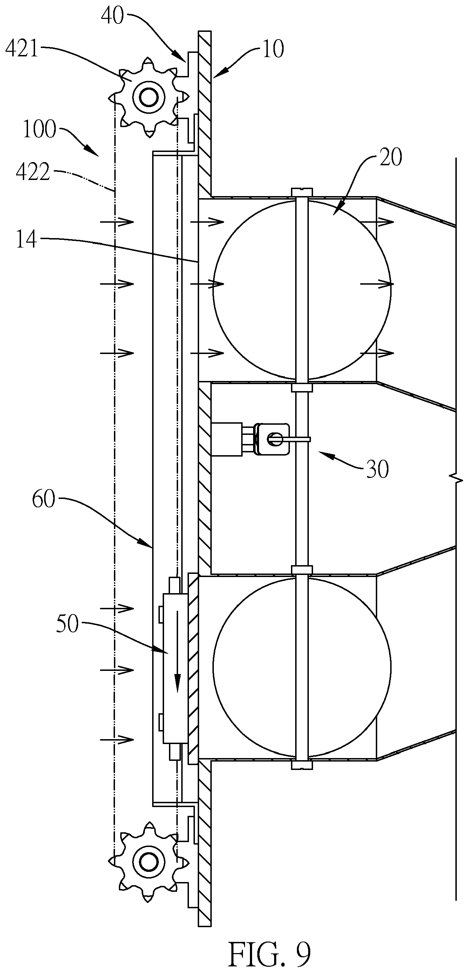

Refer to FIG. 7 through FIG. 9, and FIG. 7 through FIG. 9 are respectively a first through third schematic diagrams of a second embodiment of an energy-saving wind box not falling within the scope of the claims. The energy-saving wind box 100 in the second embodiment has the components of the energy-saving wind box 100 in the first embodiment, and further comprises a lifting structure 40, a shield plate 50 and at least one guide frame 60. The inner surface 13 of the wind box body 10 has a plurality of through holes 14 arranged horizontally in the lower row and the upper row, the through holes 14 arranged in the lower row are arranged respectively opposite to the through holes 14 arranged in the upper row, and the through holes 14 are respectively connected to the wind holes 121. The lifting structure 40 is disposed on the inner surface 13 of the wind box body 10. The shield plate 50 is connected to the lifting structure 40. The guide frame 60 is disposed on the inner surface 13 of the wind box body 10 and connected to the shield plate 50, and the shield plate 50 is controlled by the lifting structure 40 to slide on the guide frame 60, so that the shield plate can rise or descend. The through holes 14 in the upper row or the lower row can be closed by the shield plate 50 according to the requirements, so that the wind power can only be output from the wind holes 121 in the upper row or the lower row. Further, the guide frame 60 has a position limiting function.

According to the above description, specifically, the lifting structure 40 comprises two bracket components 41 and at least one transmission component 42. The two bracket components 41 are respectively arranged on an upper part and a lower part of the inner surface 13 of the wind box body 10. The transmission component 42 has two transmission gears 421 and a transmission chain 422. The two transmission gears 421 are respectively disposed on the two bracket components 41, and the transmission chain 422 surrounds the two transmission gears 421 and is connected to the shield plate 50. When at least one of the two bracket components 41 rotates, the transmission chain 422 can be driven by the transmission gears 421, and then the longitudinal position of the shield plate 50 can be changed through the transmission chain 422.

Referring to FIG. 10, FIG. 10 is a schematic diagram of a cooling device, which, however, does not fall within the scope of the claims. As shown in the drawing, the cooling device at least comprises a motor 200, an air blower 300, a first wind supply pipe 400, the energy-saving wind box 100, second wind supply pipes 500 and wind outlet structures 600. The air blower 300 is connected to the motor 200. One end of the first wind supply pipe 400 is connected to the air blower 300. A wind inlet of the energy-saving wind box 100 is connected to another one end of the first wind supply pipe 400, and the other one end of the first wind supply pipe 400 is opposite to the end of the first wind supply pipe 400 which is connected to the air blower 300. One end of each of the second wind supply pipes 500 is connected to the corresponding air outlet 12 of the energy-saving wind box 100. Each of the wind outlet structures 600 is connected to another one end of the corresponding second wind supply pipe 500, the other one end of the corresponding second wind supply pipe 500 is opposite to the end of the corresponding second wind supply pipe 500 which is connected to the energy-saving wind box 100. The motor 200 adjusts a rotating speed according to a number of the opened wind holes 121 of the energy-saving wind box 100, so as to control the air blower 300 to generate a corresponding wind power, and then the wind power is output by the wind outlet structure 600.

Refer to FIG. 1 through FIG. 11, and FIG. 11 is a schematic diagram of an energy-saving cooling system of the present disclosure. As shown in the drawings, the energy-saving cooling system of the present disclosure at least comprises the slot plates 20, the driving components 30, a controlling device 700 and a detection device 800, or can further comprise the lifting structure 40, the shield plate 50 and the at least one guide frame 60. The slot plates 20 are respectively disposed in the wind holes 121 of the wind box body10. The driving components 30 is connected to the corresponding slot plate 20 in the upper row and the corresponding slot plate 20 in the lower row which is arranged opposite to the corresponding slot plate 20 in the upper row. The lifting structure 40 and the guide frame 60 are disposed on the wind box body 10 and connected to the shield plate 50. The controlling device 700 is connected to the driving components 30, the lifting structure 40 and the motor 200 of the cooling device. The detection device 800 is connected to the controlling device 700.

The position and the dimension of the piece of the glass to be cooled down are detected by the detection device 800. The controlling device 700 generates the control signal according to a detection result (i.e. the position and the dimension of the piece of the glass) of the detection device 800. The controlling device 700 controls the driving component 30 and the lifting structure 40 according to the control signal, so that the whole wind holes 121 in both of the upper and lower rows or the partial wind holes 121 in the upper and lower rows are opened for the cooling process. The controlling device 700 can adjust the rotation speed of the motor 200 according to the control signal, so that the air blower 300 generates the corresponding wind power, thereby achieving the best energy-saving efficiency.

Specifically, the present disclosure is mainly based on the arrangement of the slot plates in the wind holes of the outer surface of the wind box body, each slot plate is connected to the corresponding driving component, and the slot plate can be pivoted through the control of the driving component to close or open the corresponding wind hole. Furthermore, the present disclosure can also set a shield plate on the inner surface of the wind box body. The shield plate can be longitudinally displaced under the control of the lifting structure to selectively shield the through holes which are located on the inner surface and communicated with the wind holes. Therefore, the cooling device can adjust the wind output region according to the size and the position of the glass, and can further adjust the rotating speed of the motor according to the number of opened wind holes of the wind box body, so as to achieve energy saving and cost reduction.

## Claims

1. An energy-saving cooling system for cooling glass sheets, which is **characterized in that** the energy-saving cooling system comprises:
a motor (200);
an air blower (300), wherein the air blower (300) is connected on one end to the motor (200) and on the other end to a wind box body (10);
a plurality of slot plates (20), wherein the slot plates (20) are disposed in the wind box body (10), an outer surface (11) of the wind box body (10) has a plurality of air outlets (12), the air outlets (12) are horizontally arranged in an upper row and a lower row, the air outlets (12) in an upper row are arranged respectively opposite to the air outlets (12) in the lower row, each of the air outlets (12) has a wind hole (121), and the slot plates (20) are respectively disposed in the wind holes (121);
a plurality of driving components (30), wherein each of the driving components (30) is connected to the corresponding slot plate (20) in the upper row and the corresponding slot plate (20) in the lower row which is arranged opposite to the corresponding slot plate (20) in the upper row, the corresponding two slot plates (20) are controlled by the driving component (30) to pivot to close or open the two corresponding wind holes (121);
a controlling device (700), wherein the controlling device (700) is connected to the driving components (30) and the motor (200), the controlling device (700) controls the driving components (30) according to a control signal, and adjusts a rotating speed of the motor (200) according to the control signal, so that the air blower (300) generates corresponding wind power; and
a detection device (800), wherein the detection device (800) is connected to the controlling device (700), the controlling device (700) generates the control signal according to a position and a dimension of a piece of glass to be cooled down, and the position and the dimension of the piece of the glass to be cooled down are detected by the detection device (800).

2. The energy-saving cooling system of claim 1, wherein the driving component (30) comprises:
a base (31), wherein the base (31) is connected to the outer surface (11) of the wind box body (10);
a cylinder (32), wherein one end of the cylinder (32) is connected to the base (31);
an adapter (33), wherein one end of the adapter (33) is connected to another one end of the cylinder (32), and the other one end of the cylinder (32) is opposite to the end of the cylinder (32) which is connected to the base (31);
a pivot (34), wherein one end of the pivot (34) is connected to the another one end of the adapter (33), and the other one end of the adapter (33) is opposite to the end of the adapter (33) which is connected to the cylinder (32); and
a connecting rod (35), wherein the connecting rod (35) is connected to another one end of the pivot (34), the other one end of the pivot (34) is opposite to the end of pivot (34) which is connected to the adapter (33), and two opposite ends of the connecting rod (35) are connected to the corresponding slot plate (20) in the upper row and the corresponding slot plate (20) in the lower row which is arranged opposite to the corresponding slot plate (20) in the upper row.

3. The energy-saving cooling system of claim 1, wherein an inner surface (13) of the wind box body (10) has a plurality of through holes (14) arranged horizontally in the lower row and the upper row, the through holes (14) arranged in the lower row are arranged respectively opposite to the through holes (14) arranged in the upper row, and the through holes (14) are respectively connected to the wind holes (121); wherein energy-saving wind box (100) further comprises:
a lifting structure (40), wherein the lifting structure (40) is disposed on the inner surface (13) of the wind box body (10) and connected to the controlling device (700), and the controlling device (700) controls the lifting structure (40) according to the control signal; and
a shield plate (50), wherein the shield plate (50) is connected to the lifting structure (40), the shield plate (50) is controlled by the lifting structure (40) to rise or descend, so as to close the through holes (14) in the upper row or the through holes (14) in the lower row.

4. The energy-saving cooling system of claim 3, wherein the lifting structure (40) comprises:
two bracket components (41), wherein the two bracket components (41) are respectively arranged on an upper part and a lower part of the inner surface (13) of the wind box body (10); and
at least one transmission component (42), wherein the transmission component (42) comprises two transmission gears (421) and a transmission chain (422), the two transmission gears (421) are respectively disposed on the two bracket components (41), and the transmission chain (422) surrounds the two transmission gears (421) and is connected to the shield plate (50).

5. The energy-saving cooling system of claim 4, further comprising:
a guide frame (60), wherein the guide frame (60) is disposed on the inner surface (13) of the wind box body (10) and connected to the shield plate (50), and the shield plate (50) is controlled by the lifting structure (40) to slide on the guide frame (60).

## Patentansprüche

1. Energiesparende Kühlvorrichtung zur Kühlung von Glasscheiben, **dadurch gekennzeichnet, dass** die energiesparende Kühlvorrichtung die folgenden Komponenten umfasst:
einen Motor (200);
ein Gebläse (300), wobei das Gebläse (300) an einem Ende am Motor (200) und am anderen Ende an einem Windkastengehäuse (10) befestigt ist;
mehrere Schlitzplatten (20), wobei die Schlitzplatten (20) im Windkastengehäuse (10) angeordnet sind, eine Außenfläche (11) des Windkastengehäuses (10) mehrere Luftauslassöffnungen (12) aufweist, die Luftauslassöffnungen (12) horizontal in oberer und unterer Reihe angeordnet sind, die Luftauslassöffnungen (12) in einer oberen Reihe jeweils gegenüber den Luftauslassöffnungen (12) in der unteren Reihe angeordnet sind, jede der Luftauslassöffnungen (12) ein Windloch (121) aufweist, die Schlitzplatten (20) jeweils in den Windlöchern (121) angeordnet sind;
mehrere Antriebskomponenten (30), wobei jede der Antriebskomponenten (30) an der entsprechenden Schlitzplatte (20) in der oberen Reihe und der entsprechenden Schlitzplatte (20) in der unteren Reihe, die gegenüber der entsprechenden Schlitzplatte (20) in der oberen Reihe angeordnet ist, befestigt ist, wobei die entsprechenden zwei Schlitzplatten (20) durch die Antriebskomponente (30) gesteuert werden, um zu schwenken und dadurch die zwei entsprechenden Windlöcher (121) zu schließen oder zu öffnen;
eine Steuereinrichtung (700), wobei die Steuereinrichtung (700) an der Antriebskomponenten (30) und am Motor (200) befestigt ist, die Steuereinrichtung (700) die Antriebskomponenten (30) entsprechend einem Steuersignal steuert und eine Drehzahl des Motors (200) entsprechend dem Steuersignal einstellt, so dass das Gebläse (300) entsprechende Windkraft erzeugt; und
eine Detektionsvorrichtung (800), wobei die Detektionsvorrichtung (800) an der Steuereinrichtung (700) befestigt ist, die Steuereinrichtung (700) das Steuersignal entsprechend einer Position und einer Abmessung eines abzukühlenden Glasstücks erzeugt, wobei die Position und die Abmessung des abzukühlenden Glasstücks von der Detektionsvorrichtung (800) erfasst werden.

2. Die energiesparende Kühlvorrichtung nach Anspruch 1, wobei die Antriebskomponente (30) die folgenden Komponenten umfasst:
eine Basis (31), wobei die Basis (31) an der Außenfläche (11) des Windkastengehäuses (10) befestigt ist;
einen Zylinder (32), wobei ein Ende des Zylinders (32) an der Basis (31) befestigt ist;
einen Adapter (33), wobei ein Ende des Adapters (33) an einem anderen Ende des Zylinders (32) befestigt ist, während das andere Ende des Zylinders (32) dem Ende des Zylinders (32) gegenüberliegt, das an der Basis (31) befestigt ist;
ein Drehgelenk (34), wobei ein Ende des Drehgelenks (34) am anderen Ende des Adapters (33) befestigt ist und das andere Ende des Adapters (33) dem Ende des Adapters (33), das am Zylinder (32) befestigt ist, gegenüberliegt; und
eine Verbindungsstange (35), wobei die Verbindungsstange (35) an einem anderen Ende des Drehgelenks (34) befestigt ist, das andere Ende des Drehgelenks (34) dem Ende des Drehgelenks (34), das am Adapter (33) befestigt ist, gegenüberliegt, und zwei gegenüberliegende Enden der Verbindungsstange (35) an der entsprechenden Schlitzplatte (20) in der oberen Reihe und der entsprechenden Schlitzplatte (20) in der unteren Reihe, die gegenüber der entsprechenden Schlitzplatte (20) in der oberen Reihe angeordnet ist, befestigt sind.

3. Die energiesparende Kühlvorrichtung nach Anspruch 1, wobei eine Innenfläche (13) des Windkastengehäuses (10) mehrere Durchgangslöcher (14) aufweist, die horizontal in der unteren Reihe und der oberen Reihe gebildet sind, die in der unteren Reihe gebildeten Durchgangslöcher (14) jeweils gegenüber den in der oberen Reihe gebildeten Durchgangslöchern (14) gebildet sind und die Durchgangslöcher (14) jeweils mit den Windlöchern (121) verbunden sind; wobei der energiesparende Windkasten (100) weiter die folgenden Komponenten umfasst:
eine Hebevorrichtung (40), wobei die Hebevorrichtung (40) an der Innenfläche (13) des Windkastengehäuses (10) angeordnet und an der Steuereinrichtung (700) befestigt ist, und die Steuereinrichtung (700) die Hebevorrichtung (40) entsprechend dem Steuersignal steuert; und
eine Schirmplatte (50), wobei die Schirmplatte (50) an der Hebevorrichtung (40) befestigt ist, die Schirmplatte (50) von der Hebevorrichtung (40) so gesteuert wird, dass sie sich hebt oder senkt, um die Durchgangslöcher (14) in der oberen Reihe oder die Durchgangslöcher (14) in der unteren Reihe zu schließen.

4. Die energiesparende Kühlvorrichtung nach Anspruch 3, wobei die Hebevorrichtung (40) die folgenden Komponenten umfasst:
zwei Halterungskomponenten (41), wobei die beiden Halterungskomponenten (41) jeweils an einem oberen Teil und einem unteren Teil der Innenfläche (13) des Windkastengehäuses (10) angeordnet sind; und
mindestens eine Getriebekomponente (42), wobei die Getriebekomponente (42) zwei Getrieberäder (421) und eine Getriebekette (422) umfasst, die beiden Getrieberäder (421) jeweils auf den beiden Halterungskomponenten (41) angeordnet sind und die Getriebekette (422) die beiden Getrieberäder (421) umgibt und an der Schirmplatte (50) befestigt ist.

5. Die energieparende Kühlvorrichtung nach Anspruch 4, weiter umfassend:
einen Führungsrahmen (60), wobei der Führungsrahmen (60) an der Innenfläche (13) des Windkastengehäuses (10) angeordnet und an der Schirmplatte (50) befestigt ist, wobei die Schirmplatte (50) durch die Hebevorrichtung (40) so gesteuert wird, dass sie auf dem Führungsrahmen (60) gleitet.

## Revendications

1. Un système de refroidissement économe en énergie pour le refroidissement de feuilles de verre, **caractérisé en ce que** le système de refroidissement économe en énergie comprend :
un moteur (200) ;
un souffleur d'air (300), où le souffleur d'air (300) est connecté, d'un côté, au moteur (200) et, de l'autre côté, au corps du caisson de ventilation (10) ;
une pluralité de plaques à fentes (20), où les plaques à fentes (20) sont disposées dans le corps du caisson de ventilation (10), une surface extérieure (11) du corps du caisson de ventilation (10) comporte une pluralité de sorties d'air (12), les sorties d'air (12) sont disposées horizontalement en une rangée supérieure et une rangée inférieure, les sorties d'air (12) de la rangée supérieure sont respectivement alignées en face des sorties d'air (12) de la rangée inférieure, chaque sortie d'air (12) comportant un trou d'air (121) et les plaques à fentes (20) sont respectivement disposées dans les trous d'air (121) ;
une pluralité d'éléments de transmission (30), où chaque élément de transmission (30) est connecté à la plaque à fentes correspondante (20) de la rangée supérieure et à la plaque à fentes correspondante (20) de la rangée inférieure, alignée en face de la plaque correspondante (20) de la rangée supérieure, les deux plaques correspondantes (20) sont contrôlées par l'élément de transmission (30) pour pivoter et fermer ou ouvrir les deux trous d'air correspondants (121) ;
un appareil de contrôle (700), où l'appareil de contrôle (700) est connecté aux éléments de transmission (30) et au moteur (200), l'appareil de contrôle (700) commande les éléments de transmission (30) selon un signal de commande, et ajuste la vitesse de rotation du moteur (200) en fonction du signal de commande, de sorte que le souffleur d'air (300) génère une puissance de ventilation correspondante ;
un appareil de détection (800), où l'appareil de détection (800) est connecté à l'appareil de contrôle (700), l'appareil de contrôle (700) génère le signal de commande en fonction de la position et des dimensions d'une pièce de verre à refroidir, lesquelles sont détectées par l'appareil de détection (800).

2. Le système de refroidissement économe en énergie selon la revendication 1, dans lequel l'élément de transmission (30) comprend :
une base (31), où la base (31) est connectée à la surface extérieure (11) du corps du caisson de ventilation (10) ;
un cylindre (32), où une extrémité du cylindre (32) est connectée à la base (31) ;
un adaptateur (33), où une extrémité de l'adaptateur (33) est connectée à une autre extrémité du cylindre (32), et l'autre extrémité du cylindre (32) est opposée à l'extrémité du cylindre (32) qui est connectée à la base (31) ;
un pivot (34), où une extrémité du pivot (34) est connectée à l'autre extrémité de l'adaptateur (33), et l'autre extrémité de l'adaptateur (33) est opposée à l'extrémité de l'adaptateur (33) qui est connectée au cylindre (32) ;
une bielle (35), où la bielle (35) est connectée à l'autre extrémité du pivot (34), l'autre extrémité du pivot (34) étant opposée à l'extrémité du pivot (34) qui est connectée à l'adaptateur (33), et les deux extrémités opposées de la bielle (35) sont connectées respectivement à la plaque à fentes correspondante (20) de la rangée supérieure et à la plaque à fentes correspondante (20) de la rangée inférieure, cette dernière étant alignée en face de la plaque à fentes (20) correspondante de la rangée supérieure.

3. Le système de refroidissement économe en énergie selon la revendication 1, dans lequel une surface intérieure (13) du corps du caisson de ventilation (10) présente une pluralité de trous traversants (14) disposés horizontalement dans la rangée inférieure et la rangée supérieure, les trous traversants (14) de la rangée inférieure étant respectivement alignés en face des trous traversants (14) de la rangée supérieure, et les trous traversants (14) étant respectivement connectés aux trous d'air (121) ;
dans lequel le caisson de ventilation économe en énergie (100) comprend en outre :
une structure de levage (40), où la structure de levage (40) est disposée sur la surface intérieure (13) du corps de caisson de ventilation (10) et connectée à l'appareil de contrôle (700), l'appareil de contrôle (700) contrôlant la structure de levage (40) en fonction du signal de contrôle ; et
une plaque écran (50), où la plaque écran (50) est connectée à la structure de levage (40), la plaque écran (50) étant contrôlée par la structure de levage (40) pour s'élever ou descendre, afin de fermer les trous traversants (14) dans la rangée supérieure ou les trous traversants (14) dans la rangée inférieure

4. Le système de refroidissement économe en énergie selon la revendication 3, dans lequel la structure de levage (40) comprend :
deux éléments de support (41), où les deux éléments de support (41) sont respectivement disposés sur une partie supérieure et une partie inférieure de la surface intérieure (13) du corps de caisson de ventilation (10) ; et
au moins un élément de transmission (42), où l'élément de transmission (42) comprend deux engrenages de transmission (421) et une chaîne de transmission (422), les deux engrenages de transmission (421) étant respectivement disposés sur les deux éléments de support (41), et la chaîne de transmission (422) entourant les deux engrenages de transmission (421) et étant connectée à la plaque écran (50).

5. Le système de refroidissement économe en énergie selon la revendication 4, comprenant en outre :
un cadre de guidage (60), où le cadre de guidage (60) est disposé sur la surface intérieure (13) du corps du caisson de ventilation (10) et connecté à la plaque écran (50), et où la plaque écran (50) est contrôlée par la structure de levage (40) pour glisser sur le cadre de guidage (60).
